# EUROPÄISCHE PATENTSCHRIFT

(11) **EP 1 287 576 B1**
(45) Veröffentlichungstag und Bekanntmachung des Hinweises auf die Patenterteilung: **23.12.2015**
(21) Anmeldenummer: 01943466.1
(22) Anmeldetag: 01.06.2001
(51) Int. Cl.: H01M 8/10, H01M 4/86, H01M 8/12

(54) **VERFAHREN ZUM AUFBRINGEN EINER FESTELEKTROLYTSCHICHT AUF EINE PORÖSE ELEKTRODE**
METHOD FOR APPLYING A SOLID ELECTROLYTIC LAYER TO A POROUS ELECTRODE
PROCEDE POUR APPLIQUER UNE COUCHE D'ELECTROLYTE SOLIDE SUR UNE ELECTRODE POREUSE

(30) Priorität: 09.06.2000 EP 00112393
(43) Veröffentlichungstag der Anmeldung: 05.03.2003
(73) Patentinhaber: Forschungszentrum Jülich GmbH, 52425 Jülich (DE)
(72) Erfinder: FLECK, Robert, 91325 Adelsdorf (DE); JANSING, Thomas, 91056 Erlangen (DE); BLASS, Günter, 52249 Eschweiler (DE); BUCHKREMER, Hans, Peter, 52525 Heinsberg (DE); FLESCH, Udo, 52428 Jülich (DE)
(86) Internationale Anmeldenummer: PCT/EP2001/006251
(87) Internationale Veröffentlichungsnummer: WO 2001/095420

(56) Entgegenhaltungen:
- DE-A- 19 609 418
- DE-A- 19 628 593
- US-A- 5 380 601

## Beschreibung

Die Erfindung betrifft ein Verfahren zum Aufbringen einer Festelektrolytschicht auf eine poröse Elektrode, insbesondere auf eine Elektrode für eine festkeramische Brennstoffzelle, bei dem auf die Elektrode eine Feststoffschicht aus Festelektrolytmaterial durch Abscheiden von Feststoffanteilen aus einer Suspension aufgebracht wird.

Eine Brennstoffzelle umfasst regelmäßig eine Anode und eine Kathode, zwischen denen eine Elektrolytschicht aufgebracht ist. Über die Anodenoberfläche wird ein Brennstoff und über die Kathodenoberfläche wird Sauerstoff geleitet. Über die Elektrolytschicht findet ein Ionenaustausch zwischen dem Brennstoff und dem Sauerstoff statt, so dass sich zwischen Anode und Kathode eine Spannung ausbildet.

Entscheidend für die Effizienz einer Brennstoffzelle ist u.a. die Elektrolytschicht, welche einerseits gut leitfähig für die Ionen sein muss und andererseits weitgehend gasundurchlässig sein sollte, um einen Gasaustausch zwischen Brennstoff und Sauerstoff zu verhindern. An die Elektrolytschicht werden daher hohe Anforderungen gestellt.

Bei sogenannten festkeramischen Brennstoffzellen (SOFC: Solid Oxide Fuel Cell) ist die Anode sowie die Kathode aus einem porösen keramischen Material gebildet, zwischen denen eine Festelektrolytschicht angeordnet ist. Es sind festkeramische Brennstoffzellen mit einer planaren Geometrie bekannt, bei der die Anode und die Kathode im Wesentlichen planparallel zueinander verlaufen. Daneben ist auch eine zylindrische oder röhrenförmige Ausgestaltung bekannt, bei der die Anode die zylindrisch ausgebildete Kathode unter Einschluss der Festelektrolytschicht umschließt. Zum Aufbringen der Festelektrolytschicht sind eine Vielzahl von Verfahren bekannt. Aus der DE 196 09 418 C2 ist beispielsweise zu entnehmen, auf eine plane Elektrode eine Suspension aufzubringen, die Feststoffanteile aus dem Festelektrolytmaterial enthält. Überschüssiges Lösungsmittel wird durch Erzeugen eines Unterdrucks auf der der Suspension gegenüberliegenden Seite der porösen Elektrode abgeführt. Die Suspension weist hierbei grobe und feine Feststoffanteile auf, wobei die groben Feststoffanteile zunächst die Poren der Elektrode zusetzen und für eine gute Anbindung zwischen der Elektrolytschicht und der Elektrode sorgen. Die feinen Anteile scheiden sich anschließend auf den groben Anteilen ab. Die Feststoffschicht wird getrocknet und anschließend zur Ausbildung der Festelektrolytschicht gesintert. Dieses Beschichtungsverfahren ist für nicht-plane Flächen kaum geeignet, da das geichmäßige Aufbringen der Suspension auf komplexen Oberflächengeometrien schwierig ist.

Aus der DE 196 09 418 C2 ist zudem zu entnehmen, dass es bekannt ist, die Elektrolytschicht mittels Elektrophorese oder mittels Foliengießen herzustellen.

Aus dem Aufsatz "Status of Solide Oxide Fuel Cell Technologie" von S.C. Singhal, entnommen aus: High Temperature Electrochemistry: Ceramics and Metals, 17th Risφ International Symposium und Material Sience, Roskilde, Denmark, September 1996, ist zum Aufbringen der Elektrolytschicht ein EVD-Prozess bekannt (EVD: Electrochemical Vapor Deposition). Dieses Verfahren eignet sich auch für komplexe Oberflächengeometrien, insbesondere für die gekrümmten Oberflächen, wie sie bei den Zylinder- oder rohrförmigen Brennstoffzellen vorliegen. Der EVD-Prozess ist jedoch sehr teuer und aufwendig.

Aus diesem Dokument ist der prinzipielle Aufbau einer röhrenförmigen Brennstoffzelle zu entnehmen. Diese umfasst als Kathode einen porösen keramischen Innenzylinder, auf dem die Elektrolytschicht und anschließend die Anode als Mantel aufgebracht ist. Zur elektrischen Verbindung von zwei Brennstoffzellen in Serie wird die Anode der einen Brennstoffzelle direkt mit einem sogenannten Interkonnektor der zweiten Brennstoffzelle verbunden, wobei die Elektrolytschicht und die Anode der Brennstoffzellen im Bereich des Interkonnektors unterbrochen sind. Aus dem genannten Aufsatz ist zu entnehmen, dass sowohl die Elektrolytschicht als auch der Interkonnektor und die Anode üblicherweise mittels des EVD-Prozesses aufgebracht werden. Der Aufsatz befasst sich mit dem Problem, den teueren EVD-Prozess durch andere Beschichtungssysteme zu ersetzen. Während heute, wie im Aufsatz vorgeschlagen, neue Beschichtungsverfahren für den Interkonnektor und für die Anode entwickelt und auch eingesetzt werden, ist für die Elektrolytschicht weiterhin der EVD-Prozess vorgesehen, um eine ausreichend hohe Qualität zu gewährleisten.

Der Erfindung liegt die Aufgabe zugrunde, ein einfaches Verfahren zum Aufbringen einer Festelektrolytschicht auf eine poröse Elektrode anzugeben, welches auch für komplexe Geometrien geeignet ist.

Die Aufgabe wird gemäß der Erfindung gelöst, indem bei dem Verfahren auf die poröse Elektrode, insbesondere auf die Elektrode für eine festkeramische Brennstoffzelle, eine Feststoffschicht aus Festelektrolytmaterial durch Abscheiden von Feststoffanteilen aus einer Suspension aufgebracht wird, wobei die Elektrode als Hohlkörper ausgebildet ist, welcher zur Aufbringung der Feststoffschicht in die Suspension eingetaucht wird.

Durch das Eintauchen wird in einfacher und vorteilhafter Weise eine gleichmäßige Benetzung der zu beschichtenden Außenfläche des Hohlkörpers erreicht. Durch das Eintauchen können somit auf einfache Art und Weise auch komplexe Bauteilgeometrien beschichtet werden.

Um ein möglichst rasches Aufbauen der Feststoffschicht zu erzielen, wird zwischen dem Innenraum des Hohlkörpers und der Suspension ein Druckgefälle eingestellt, so dass ein in der Suspension enthaltenes Lösungsmittel in den Innenraum gelangt.

Ein wesentlicher Vorteil des Eintauchens in die Suspension insbesondere in Verbindung mit dem Anlegen eines Unterdrucks besteht darin, dass unabhängig von der speziellen komplexen Geometrie des Hohlkörpers die Feststoffanteile gleichmäßig auf der Außenfläche abgeschieden werden, so dass am Ende eine dünne, homogene Festelektrolytschicht gleichbleibender Dicke ausgebildet werden kann.

Vorzugsweise wird das Druckgefälle über eine in den Innenraum reichende Saugleitung aufrecht erhalten, um ein gleichmäßiges Abscheiden der Feststoffanteile zu gewährleisten. Das Druckgefälle oder der Druckunterschied zwischen der suspensionsseitigen Außenseite des Hohlkörpers und der zum Innenraum gewandten Innenseite ist daher während des gesamten Abscheideprozesses möglichst konstant gehalten.

In einer bevorzugten Ausführung wird das in den Innenraum gelangte Lösungsmittel abgeführt. Dies erlaubt in vergleichsweise einfacher Weise die Aufrechterhaltung eines konstanten Druckgefälles und ist günstig für einen möglichst gleichmäßigen Abscheidungsprozess der Feststoffanteile.

In besonders zweckdienlicher Weise wird über die Saugleitung zugleich auch das Lösungsmittel abgeführt, so dass ein separates Leitungssystem für das Lösungsmittel nicht erforderlich ist.

Für einen möglichst einfachen Beschichtungsprozess ist vorteilhafterweise vorgesehen, dass bei Erreichen einer gewünschten Schichtdicke der Feststoffschicht der Hohlkörper aus der Suspension entnommen wird. Die Suspension liegt also im Überschuss vor und es ist nicht notwendig, die Menge der Suspension, in die der Hohlkörper getaucht wird, auf die gewünschte Schichtdicke abzustimmen.

Um beim Herausnehmen des Hohlkörpers aus der Suspension eine Schädigung der bereits abgeschiedenen Feststoffschicht zu verhindern, wird das Druckgefälle bei der Entnahme des Hohlkörpers vorzugsweise aufrecht erhalten.

Besonders zweckdienlich ist es, wenn zur Ermittlung der Schichtdicke der bereits abgeschiedenen Feststoffschicht die abgeführte Menge an Lösungsmittel herangezogen wird. Aus der Menge des abgeführten Lösungsmittels ist die Menge der abgeschiedenen Feststoffteile ableitbar. Dies erlaubt ein einfaches Bestimmen der Schichtdicke. Zusätzlich oder alternativ wird die Schichtdicke aus der Menge an eingesaugter Suspension bestimmt. Dies geschieht am einfachsten durch Messung oder Regulierung des Füllstands der Suspension in einem Behälter, in dem die Elektrode eingetaucht ist.

In einer zweckdienlichen Ausbildung weist die Suspension grobe und feine Feststoffanteile auf, so dass sich eine hochwertige Festelektrolytschicht ausbilden kann. Die groben Feststoffanteile setzen sich in die Poren des Hohlkörpers ab und sorgen damit für eine gute Anbindung der Elektrolytschicht. Die feinen Feststoffanteile scheiden sich anschließend ab und gewährleisten eine weitgehend dichte Ausbildung der Elektrolytschicht.

Um eine hochwertige Elektrolytschicht zu erreichen, ist vorzugsweise vorgesehen, dass der maximale Durchmesser der groben Feststoffanteile etwa dem maximalen Porendurchmesser des Hohlkörpers entspricht. Typischerweise liegen die Werte für diesen maximalen Durchmesser der groben Feststoffanteile zwischen 5 und 20 µm. Mit einer derartigen Wahl des Durchmessers wird verhindert, dass evtl. zu große grobe Feststoffanteile zu Unebenheiten auf der Oberfläche und damit zu nachteiligen Inhomogenitäten führen. Gleichzeitig wird damit eine gute Ausbildung der Elektrolytschicht auf der Elektrode erreicht.

Vorzugsweise liegt dabei der Anteil der groben Feststoffanteile etwa zwischen 1 und 15 Vol% der Suspension. Dieser Anteil ist ausreichend, um die oberflächennahen, groben Poren des Hohlkörpers zuzusetzen.

Um eine möglichst dichte und homogene Elektrolytschicht auszubilden, entspricht der Durchmesser der feinen Feststoffanteile etwa 1/3 des minimalen Porendurchmessers des Hohlkörpers. Vorzugsweise ist der Durchmesser dabei etwa kleiner als 1 µm, da der Porendurchmesser der kleineren Poren etwa zwischen 1 und 10 µm liegt.

Um die Festigkeit der aufgebrachten Schicht in getrockneter Form zu gewährleisten, wird bevorzugt ein Binder (z.B. Polyethylenimin PEI) der Suspension (4) zugesetzt. Dieses bewirkt ein Verkleben der "grünen" Schichtpartikel.

Zur gasdichten haftfesten Aufbringung der Festelektrolytschicht wird die Feststoffschicht anschließend vorzugsweise getrocknet und durch Sintern verdichtet. Die entstehende Schicht ist dabei weitgehend gasdicht. Das Sintern erfolgt beispielsweise nach herkömmlicher Art in einem mit Heizstäben beheizten Sinterofen bei Temperaturen von 1300°C bis 1500°C über einen Zeitraum von mehreren Stunden.

Ein Ausführungsbeispiel der Erfindung wird im Folgenden anhand der Zeichnung näher erläutert. Es zeigen jeweils in schematischen Darstellungen,
- FIG 1: einen Aufbau zur Durchführung des Verfahrens,
- FIG 2: beispielhafte Hohlkörper-Geometrien und
- FIG 3: ein Diagramm zur Teilchengrößenverteilung der Feststoffanteile in einer Suspension

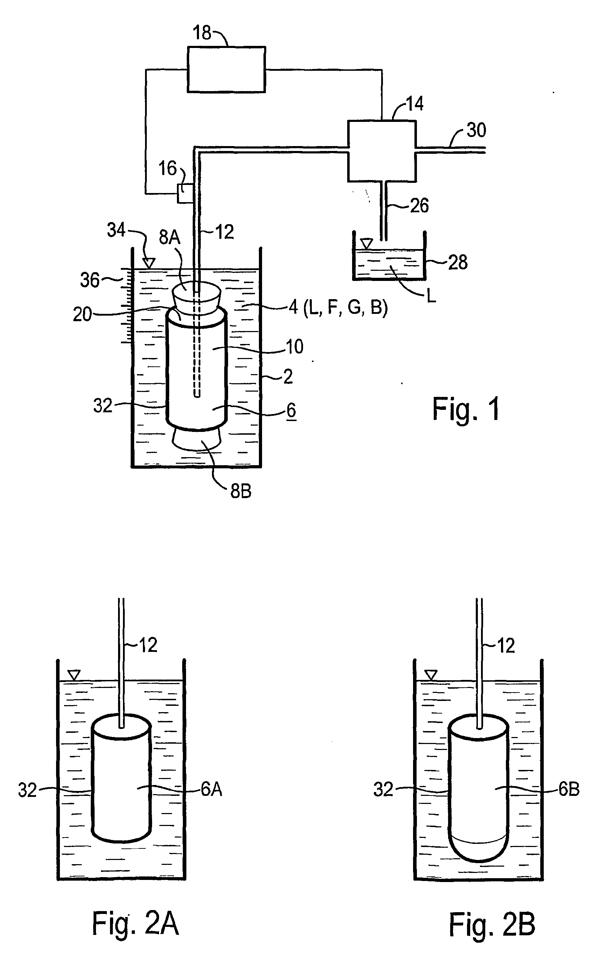

Gemäß FIG 1 weist eine Anordnung zur Durchführung des Verfahrens einen Behälter 2 auf, in dem eine Suspension 4 eingefüllt ist. Die Suspension 4 umfasst ein Lösungsmittel L, feine Feststoffanteile F und grobe Feststoffanteile G sowie einen Binder B. Die Feststoffanteile F,G bestehen aus einem Festelektrolytmaterial und sind in der Suspension 4 homogen verteilt. In diese Suspension 4 ist ein zylindrischer Hohlkörper 6 eingetaucht, der als Elektrode, insbesondere Kathode, für eine röhrenförmige Brennstoffzelle dient. Der Hohlkörper 6 besteht aus einer porösen Keramik. Seine offenen Stirnseiten sind über jeweils einen Verschlussstopfen 8A,8B abgedichtet, damit die Suspension 4 nicht in den Innenraum 10 des Hohlkörpers 6 gelangt. Durch den oberen Verschlussstopfen 8A ist eine Saugleitung 12 in den Innenraum 10 geführt und erstreckt sich innerhalb dessen bis in etwa zu dem gegenüberliegenden Verschlussstopfen 8B. Die Saugleitung 12 ist mit einer Pumpeinrichtung 14 verbunden, und an ihr ist ein Durchflussmessgerät 16 angeordnet. Dieses ist mit einer Steuereinrichtung 18 verbunden, über die die Pumpeinrichtung 14 ansteuerbar ist. Die Pumpeinrichtung 14 dient zur Erzeugung eines Druckgefälles über die Wand 20 des Hohlkörpers 6. Zwischen der der Suspension 4 zugewandten Außenseite und der zum Innenraum 10 hin orientierten Innenseite des Hohlkörpers 6 wird also eine Druckdifferenz aufgebaut.

Die Pumpeinrichtung 14 ist zum Trennen von gasförmigen Anteilen von flüssigen Anteilen ausgelegt. Sie weist hierzu eine in einen Auffangbehälter 28 mündende Ableitung 26 sowie eine Abgasleitung 30 auf.

An der Außenseite des eingetauchten Hohlkörpers 6 scheiden sich die Feststoffanteile F,G,B ab und bilden eine Feststoffschicht 32 aus Festelektrolytmaterial. Durch die Erzeugung der Druckdifferenz über die Pumpeinrichtung 14 wird für einen kontinuierlichen und dauerhaften Schichtaufbau gesorgt. Aufgrund der porösen Ausbildung des Hohlkörpers 6 gelangt das Lösungsmittel L durch den Hohlkörper 6 hindurch in den Innenraum 10. Aus diesem wird das Lösungsmittel über die Saugleitung 12 insbesondere kontinuierlich abgepumpt. Die Saugleitung 12 dient daher gleichzeitig zum Abpumpen von Gas aus dem Innenraum 10 und zum Abpumpen von Lösungsmittel L zur Erzeugung und Aufrechterhaltung des Druckgefälles. Das abgepumpte Lösungsmittel L wird im Auffangbehälter 28 gesammelt. Die Menge des abgepumpten Lösungsmittels L wird über das Durchflussmessgerät 16 gemessen. Aus der gemessenen Menge wird unter Berücksichtigung des Feststoffanteils in der Suspension 4 mittels der Steuereinrichtung 18 die Schichtdicke der abgeschiedenen Feststoffschicht 32 berechnet. Ist der Feststoffgehalt der Suspension (4) bekannt, so kann die Schichtdickeneinstellung über die Regulierung des Niveaus 34, der Suspension 4 im Behälter 2, beispielsweise mit Hilfe einer Skala 36, vorgenommen werden.

Sobald die gewünschte Schichtdicke erreicht ist, wird der Hohlkörper 6 unter Beibehaltung der Druckdifferenz aus der Suspension 4 entnommen oder die Suspension abgelassen. Der Hohlkörper 6 weist nunmehr eine homogen aufgebrachte Feststoffschicht 32 aus Festelektrolytmaterial auf. Zur Vollendung der Festelektrolytschicht wird in weiteren Verfahrensschritten die Feststoffschicht 32 zunächst vorzugsweise an der Luft getrocknet und anschließend durch Sintern verdichtet. Das Sintern erfolgt beispielsweise durch ein herkömmliches Sinterverfahren bei hohen Temperaturen von 1300°C bis 1500°C und bei einer Sinterzeit von mehreren Stunden.

Das beschriebene Verfahren dient zum Aufbringen einer Festelektrolytschicht auf der Anode einer Brennstoffzelle mit insbesondere tubularem oder röhrenförmigem Aufbau. Durch das Eintauchen in die Suspension 4 ist in einfacher Weise eine homogene und gleichmäßige Beschichtung des Hohlkörpers 6 ermöglicht. Insbesondere lassen sich damit auch komplexe Körpergeometrien in einfacher Weise homogen beschichten.

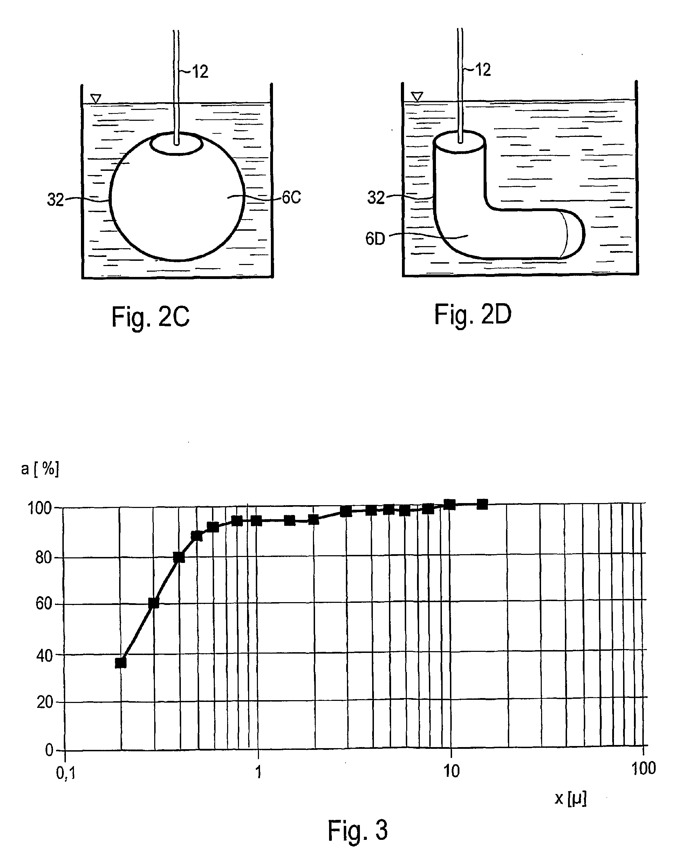

Aus den FIG 2A bis 2D sind beispielhaft unterschiedliche Geometrien für den Hohlkörper 6 zu entnehmen. Gemäß FIG 2A ist eine zylindrische Geometrie eines Hohlkörpers 6A mit offenen Stirnseiten vorgesehen. Gemäß FIG 2B ist ein ebenfalls zylindrischer Hohlkörper 6B vorgesehen, welcher an seiner einen Stirnseite verschlossen ist. Ebenso lassen sich kugelförmige Hohlkörper 6C (FIG 2C) oder andersartig geformte, beispielsweise L-förmige Hohlkörper 6D (FIG 2D) mit diesem Verfahren homogen beschichten.

Die Feststoffanteile F,G in der Suspension 4 weisen eine Teilchengrößenverteilung auf, wie sie beispielhaft dem Diagramm gemäß FIG 3 zu entnehmen ist. In dem Diagramm ist die Teilchengröße x in µm gegenüber dem kumulierten Feststoffanteil a in % aufgetragen. Hieraus ist zu entnehmen, dass die Teilchengröße x von etwa 0,2 µm bis 20 µm reicht, wobei der Anteil a der feinen Feststoffanteile F, die einen Durchmesser < 1 µm aufweisen über 95% liegt. Dementsprechend liegt der Anteil der groben Feststoffanteile G mit einem Teilchendurchmesser über 5 µm im Bereich von nur wenigen Prozentpunkten, bezogen auf den gesamten Feststoffanteil in der Suspension 4. Bezogen auf die Suspension 4 wird ein Anteil von 1-15 Vol.% der groben Feststoffanteile G angestrebt.

Die Teilchengrößenverteilung ist derart gewählt, dass die größten Teilchen des groben Feststoffanteils einen Durchmesser aufweisen, welcher der maximalen Porengröße des Hohlkörpers 6 entspricht. Mit den groben Feststoffanteilen G werden dadurch die Poren des Hohlkörpers 6 zugesetzt, so dass die feinen Feststoffanteile F nicht durch die Wand des Hohlkörpers 20 hindurch gelangen. Sie lagern sich vielmehr auf der Außenseite des Hohlkörpers 6 ab und bilden eine homogene und gleichmäßige Feststoffschicht 32 aus. Um eine möglichst dichte Feststoffschicht und damit auch eine möglichst dichte Festelektrolytschicht zu erhalten, sind die feinen Feststoffanteil F sehr klein gewählt und liegen insbesondere in einem Bereich von etwa 30% der Größe der kleinen Poren. Deren Durchmesser liegt beispielsweise typischerweise zwischen 1 und 10 µm.

## Patentansprüche

1. Verfahren zum Aufbringen einer Festelektrolytschicht auf eine poröse Elektrode (6) für eine festkeramische Brennstoffzelle, bei dem auf die Elektrode eine Feststoffschicht (32) aus Festelektrolytmaterial durch Abscheiden von Feststoffanteilen (F, G) aus einer Suspension (4) aufgebracht wird, **dadurch gekennzeichnet,**
- **dass** die Elektrode (6) als Hohlkörper ausgebildet ist, welcher zur Aufbringung der Feststoffschicht (32) in die Suspension (4) eingetaucht wird und
- dass ein Druckgefälle zwischen dem Innenraum (10) des Hohlkörpers (6) und der Suspension (4) eingestellt wird, so dass ein in der Suspension enthaltenes Lösungsmittel (1) in den Innenraum (10) des Hohlkörpers (6) gelangt, und die Feststoffanteile (F, G) außen am Hohlkörper (6) abgeschieden werden.

2. Verfahren nach Anspruch 1,
**dadurch gekennzeichnet,**
**dass** das Druckgefälle über eine in den Innenraum (10) reichende Saugleitung (12) aufrecht erhalten wird.

3. Verfahren nach Anspruch 1 bis 2,
**dadurch gekennzeichnet,**
**dass** das durch den Hohlkörper (6) gelangtes Lösungsmittel (2) abgeführt wird.

4. Verfahren nach Anspruch 1 bis 3,
**dadurch gekennzeichnet,**
**dass** über die Saugleitung (12) das Lösungsmittel (2) abgeführt wird.

5. Verfahren nach einem der Ansprüche 1 bis 4,
**dadurch gekennzeichnet,**
**dass** bei Erreichen einer gewünschten Schichtdicke der Feststoffschicht (32) der Hohlkörper (6) aus der Suspension (4) entnommen wird.

6. Verfahren nach Anspruch 1 bis 5,
**dadurch gekennzeichnet,**
**dass** das Druckgefälle bei der Entnahme des Hohlkörpers (6) aus der Suspension (4) aufrechterhalten wird.

7. Verfahren nach einem der Ansprüche 1 bis 6,
**dadurch gekennzeichnet,**
**dass** die Schichtdicke durch Messung der abgeführten Menge an Lösungsmittel (1) und/oder durch Messung der Menge an eingesaugter Suspension (4) ermittelt wird.

8. Verfahren nach einem der Ansprüche 1 bis 7,
**dadurch gekennzeichnet,**
**dass** die Suspension (4) grobe Feststoffanteile (G) und feine Feststoffanteile (F) aufweist.

9. Verfahren nach Anspruch 8,
**dadurch gekennzeichnet,**
**dass** der maximale Durchmesser der groben Feststoffanteile (G) etwa dem maximalen Porendurchmesser des Hohlkörpers (6) entspricht und insbesondere etwa zwischen 5 und 20 µm liegt.

10. Verfahren nach Anspruch 8 bis 9,
**dadurch gekennzeichnet,**
**dass** der Anteil der groben Feststoffanteile (G) etwa 1 bis 15 Vol.-% der Suspension (4) beträgt.

11. Verfahren nach einem der Ansprüche 8 bis 10,
**dadurch gekennzeichnet,**
**dass** der Durchmesser der feinen Feststoffanteile (F) etwa 1/3 des minimalen Porendurchmessers des Hohlkörpers (6) entspricht und insbesondere etwa kleiner als 1 µm ist.

12. Verfahren nach einem der Ansprüche 1 bis 11,
**dadurch gekennzeichnet,**
**dass** die Suspension einen Binder (B) aufweist.

13. Verfahren nach einem der Ansprüche 1 bis 12,
**dadurch gekennzeichnet,**
**dass** die abgeschiedene Feststoffschicht (32) getrocknet und anschließend durch Sintern zur Festelektrolytschicht verdichtet wird.

## Claims

1. Method for applying a solid electrolytic layer to a porous electrode (6) for a solid ceramic fuel cell, in which a solid layer (32) of solid electrolytic material is applied to the electrode by precipitating solid parts (F, G) from a suspension (4),
**characterised in that**
- the electrode (6) is made as a hollow body, which is immersed into the suspension (4) to apply the solid layer (32) and
- a drop in pressure between the inner area (10) of the hollow body (6) and the suspension (4) is set so that a solvent (1) contained in the suspension gets into the inner area (10) of the hollow body (6) and the solid parts (F, G) are precipitated outside on the hollow body (6).

2. Method according to claim 1,
**characterised in that**
the drop in pressure is maintained through a suction line (12) reaching into the inner area (10).

3. Method according to claim 1 to 2,
characaterised in that
the solvent (2) that has got in through the hollow body (6) is led off.

4. Method according to claim 1 to 3,
**characterised in that**
the solvent (2) is led off through the suction line (12).

5. Method according to one of claims 1 to 4,
**characterised in that**
the hollow body (6) is taken out of the suspension (4) when the solid layer (32) reaches a desired layer thickness.

6. Method according to claim 1 to 5,
**characterised in that**
the drop in pressure is maintained when the hollow body (6) is taken out of the suspension (4).

7. Method according to one of claims 1 to 6,
**characterised in that**
the layer thickness is determined by measuring the amount of solvent (1) led off and/or by measuring the amount of suspension (4) sucked in.

8. Method according to one of claims 1 to 7,
**characterised in that**
the suspension (4) has coarse solid parts (G) and fine solid parts (F).

9. Method according to claim 8,
**characterised in that**
the maximum diameter of the coarse solid parts (G) corresponds more or less to the maximum pore diameter of the hollow body (6) and in particular is more or less between 5 and 20 µm.

10. Method according to claim 8 to 9,
**characterised in that**
the proportion of coarse parts (G) is more or less 1 to 15 Vol.-% of the suspension (4).

11. Method according to one of claims 8 to 10, **characterised in that** the diameter of the fine solid parts (F) corresponds more or less to 1/3 of the minimum pore diameter of the hollow body (6) and in particular is more or less smaller than 1 µm.

12. Method according to one of claims 1 to 11, **characterised in that** the suspension has a binder (B).

13. Method according to one of claims 1 to 12, **characterised in that** the solid layer (32) that has been precipitated is dried and then compressed into the solid electrolytic layer by sintering.

## Revendications

1. Procédé servant à appliquer une couche d'électrolyte solide sur une électrode (6) poreuse pour une cellule à combustible en céramique solide, dans le cadre duquel une couche de matière solide (32) composée d'un matériau d'électrolyte solide est appliquée sur l'électrode par déposition de fractions de matière solide (F, G) issues d'une suspension (4),
**caractérisé en ce**
- **que** l'électrode (6) est réalisée sous la forme d'un corps creux, qui est immergé dans la suspension (4) aux fins de l'application de la couche de matière solide (32), et
- **qu'**une chute de pression entre l'espace intérieur (10) du corps creux (6) et la suspension (4) est ajustée de sorte qu'un dissolvant (1) contenu dans la suspension parvienne dans l'espace intérieur (10) du corps creux (6) et les fractions de matière solide (F, G) soient déposées à l'extérieur au niveau du corps creux (6).

2. Procédé selon la revendication 1,
**caractérisé en ce**
**que** la chute de pression est maintenue par l'intermédiaire d'une conduite d'aspiration (12) atteignant l'espace intérieur (10).

3. Procédé selon la revendication 1 et 2,
**caractérisé en ce**
**que** le dissolvant (2) parvenu à travers le corps creux (6) est évacué.

4. Procédé selon la revendication 1 à 3,
**caractérisé en ce**
**que** le dissolvant (2) est évacué par l'intermédiaire de la conduite d'aspiration (12).

5. Procédé selon l'une quelconque des revendications 1 à 4,
**caractérisé en ce**
**que** le corps creux (6) est retiré de la suspension (4) lorsqu'une épaisseur de couche souhaitée de la couche de matière solide (32) est atteinte.

6. Procédé selon la revendication 1 à 5,
**caractérisé en ce**
**que** la chute de pression est maintenue lors du retrait du corps creux (6) de la suspension (4).

7. Procédé selon l'une quelconque des revendications 1 à 6,
**caractérisé en ce**
**que** l'épaisseur de couche est déterminée par une mesure de la quantité évacuée de dissolvant (1) et/ou par une mesure de la quantité de suspension (4) introduite par aspiration.

8. Procédé selon l'une quelconque des revendications 1 à 7,
**caractérisé en ce**
**que** la suspension (4) présente des fractions de matière solide épaisses (G) et des fractions de matière solide fines (F).

9. Procédé selon la revendication 8,
**caractérisé en ce**
**que** le diamètre maximal des fractions de matière solide épaisses (G) correspond approximativement au diamètre de pore maximal du corps creux (6) et présente en particulier approximativement une valeur entre 5 et 20 µm.

10. Procédé selon la revendication 8 et 9,
**caractérisé en ce**
**que** la fraction des fractions de matière solide épaisses (G) présente une valeur allant approximativement de 1 à 15 % en vol. de la suspension (4).

11. Procédé selon l'une quelconque des revendications 8 à 10,
**caractérisé en ce**
**que** le diamètre des fractions de matière solide fines (F) correspond approximativement à 1/3 du diamètre de pore minimal du corps creux (6) et est en particulier approximativement inférieur à 1 µm.

12. Procédé selon l'une quelconque des revendications 1 à 11,
**caractérisé en ce**
**que** la suspension présente un liant (B).

13. Procédé selon l'une quelconque des revendications 1 à 12,
**caractérisé en ce**
**que** la couche de matière solide (32) déposée est séchée et est immédiatement après comprimée par frittage pour former la couche d'électrolyte solide.
